Europäisches Patentamt

European Patent Office

Office européen des brevets

(11) Veröffentlichungsnummer : **0 080 743**
**B1**

(12) # EUROPÄISCHE PATENTSCHRIFT

(45) Veröffentlichungstag der Patentschrift :
07.05.86

(51) Int. Cl.⁴ : **F 16 B 31/00, F 16 B 33/02**

(21) Anmeldenummer : **82201227.4**

(22) Anmeldetag : **01.10.82**

(54) Anordnung zum Vorspannen eines Befestigungsbolzens.

(30) Priorität : **27.11.81 CH 7605/81**

(43) Veröffentlichungstag der Anmeldung :
**08.06.83 Patentblatt 83/23**

(45) Bekanntmachung des Hinweises auf die Patenterteilung : **07.05.86 Patentblatt 86/19**

(84) Benannte Vertragsstaaten :
**CH DE FR IT LI NL SE**

(56) Entgegenhaltungen :
**CH-A- 422 431
DE-A- 2 938 476
DE-A- 3 006 464
ENGINEERING, Band 215, Nr. 10, Oktober 1975,
Seiten I - VIII; Technical file Nr. 22. J.M. SHARMAN,
"Threaded Fastener Selection", Siehe Seite VI, mittlere Spalte, Zellen 16-27; Figur 27-b**

(73) Patentinhaber : **BBC Aktiengesellschaft Brown,
Boveri & Cie.
Haselstrasse
CH-5401 Baden (CH)**

(72) Erfinder : **Novacek, Peter, Dipl.-Ing.
Oberriedenstrasse 30A
CH-5412 Gebenstorf (CH)**

## Beschreibung

Die vorliegende Erfindung betrifft eine Anordnung zum Vorspannen eines zwei Maschinenteile verbindenden Befestigungsbolzens gemäss Oberbegriff des Patentanspruchs 1.

Bei einer aus der DE-A-29 38 476 bekannten Anordnung verbindet der dort vorzuspannende Kupplungsbolzen zwei Kupplungshälften und ist an seinen beiden, aus den Befestigungsmuttern herausragenden Enden mit einem Zusatzgewinde versehen, welches den gleichen Durchmesser aufweist wie das eigentliche Befestigungsgewinde. An diesem Zusatzgewinde, welches zur Kraftübertragung eine angemessene Länge aufweisen muss, greift die Spannvorrichtung an. Von Nachteil kann sich eine derartige Anordnung dort auswirken, wo beispielsweise bei bewegten Maschinenteilen überstehende Bolzenenden unerwünscht sind.

Eine Spannanordnung der eingangs genannten Art, bei welcher der zu spannende Bolzen auf die zu Befestigungszwecken berechnete Länge beschränkt bleibt, ist bekannt aus der CH-A-422 431. Der massgebende Gewindeteil ist dort als zylindrisches Gewinde ausgebildet. Je nach Wahl des Gewindedurchmessers wird bei dieser Lösung der verbleibende Querschnitt zwischen Innengewinde und Aussengewinde am Befestigungsbolzen und/oder am Zugelement der Spannvorrichtung zu gering sein, um die gegebenenfalls bis zur Streckgrenze erforderliche Dehnung des Befestigungsbolzens durchzuführen.

Der im Kennzeichen des Patentanspruchs 1 definierten Erfindung liegt deshalb die Aufgabe zugrunde, eine Anordnung mit « organischer » Kraftübertragung zu schaffen, d. h., bei der in dem Masse, wie die übertragene Kraft in den Bauteilen zunimmt resp. abnimmt, auch die übertragenden Querschnitte der Bauteile zunehmen resp. abnehmen. Dadurch wird im Gewindeteil ein einheitliches Spannungsniveau erzielt.

Die Konizität und die Art des Gewindes wird zweckmässigerweise in Funktion der aufzubringenden Spannkraft und der vorhandenen, am stärksten belasteten Querschnitte von Bolzen und eigentlicher Spannvorrichtung gewählt.

In der Zeichnung ist die Erfindung anhand eines Ausführungsbeispieles dargestellt, wobei die Maschinenteile zwei zu verbindende Kupplungshälften sind.

Es zeigen :

Figur 1 einen Längsschnitt durch einen Teil einer Wellenkupplung ;

Figur 2 einen Schnitt durch einen Teil einer Kupplungshälfte mit angesetzter Spannvorrichtung, in gegenüber Fig. 1 vergrössertem Massstab.

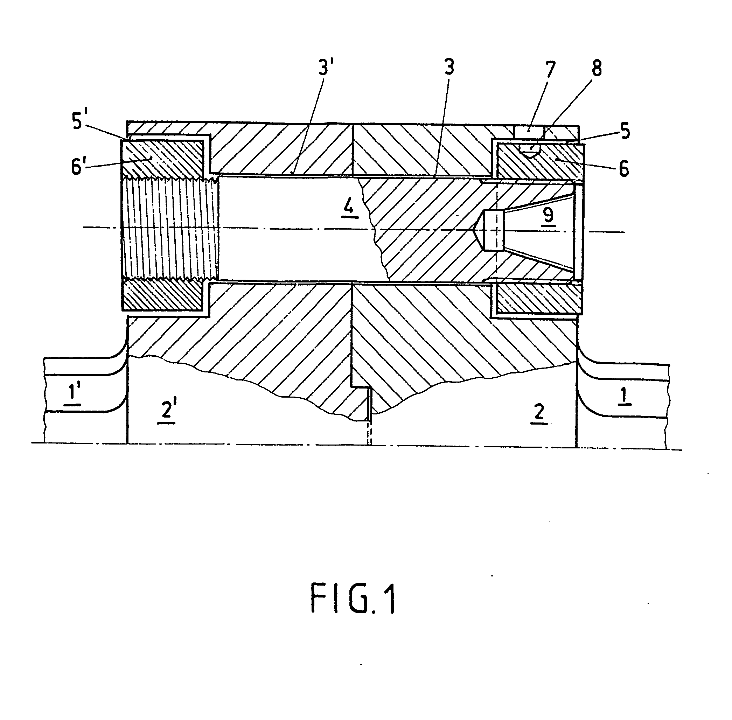

Die über ihre Kupplungsflansche 2, 2' verbundenen Wellenteile 1, 1' sind in Fig. 1 in der Montagephase gezeigt.

Durch die fluchtenden Kupplungslöcher 3, 3' ist der als Dehnungsschraube ausgebildete Befestigungsbolzen 4 mit lose aufgeschraubten Muttern 6, 6' gesteckt. Um strömungsgünstige, möglichst glatte Stirnflächen der fertig montierten Kupplung zu erreichen, sind die Muttern 6, 6' in Aussparungen 5, 5' der Flansche versenkt angeordnet. Zum Anziehen der Schraubverbindung ist die bei angebrachter Spannvorrichtung unzugängliche Mutter 6 mit Sacklöchern 8 versehen. Eine entsprechend dimensionierte Durchgangsöffnung — im vorliegenden Fall ein Schlitz 7 — ist am Aussenumfang des Flansches 2 so angeordnet, dass ein geeignetes Werkzeug in das Sackloch 8 eingeführt und die Mutter 6 gedreht werden kann.

Das für die Aufnahme einer Spannvorrichtung vorgesehene erfindungsgemässe Gewindeteil 9 ist am betroffenen Bolzenende als koaxiales, konisches Gewinde eingearbeitet. Die tragende Gewindelänge ist nicht grösser als die Höhe der aufgeschraubten Mutter 6. Dadurch wird der wirksame Querschnitt im Dehnungsabschnitt des Bolzens 4 nicht beeinträchtigt. Der Kegelwinkel beträgt hier 20°, wobei es sich versteht, dass ein beliebiger Kegelwinkel zwischen 20° und 60° zur Anwendung gelangen kann. Bei der Winkelwahl sind hier die Materialeigenschaften der am Spannvorgang beteiligten Elemente sowie die vorgesehene Belastung ausschlaggebend.

Vorzugsweise wird als Gewindeform ein metrisches Feingewinde gewählt ; aber auch jedes andere genormte oder nicht genormte Gewinde scheint hierfür geeignet.

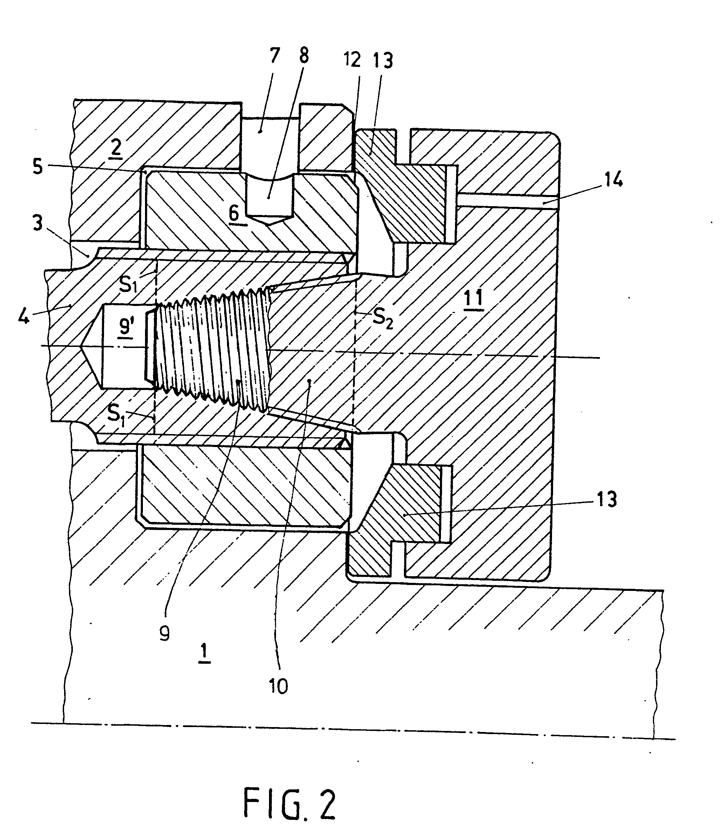

In Fig. 2, in welchem die gleichen Teile mit den gleichen Bezugszeichen versehen sind, wie in Fig. 1, ist die einseitig angesetzte hydraulische Spannvorrichtung schematisch dargestellt. Der in das Innengewinde der Dehnschraube eingesetzte Zugbolzen 10 trägt an seinem konischen Teil das zum Innengewinde passende Aussengewinde. Die erfindungsunwesentliche zylindrische Bohrung 9' ist herstellungsbedingt. Zur Vereinfachung ist der Zugbolzen 10 und der Tragkörper 11 einteilig dargestellt. Letzterer ist mit einem Druckölkanal 14 versehen, über den der ringförmige, an der Stirnwand 12 des Flansches 2 anliegende Hydraulikkolben 13 zum Spannen des Befestigungsbolzens 4 mit Hydraulikflüssigkeit beaufschlagt wird.

Anlässlich der bis zu 80 % der Streckgrenze hinreichenden Dehnung des Befestigungsbolzens 4 ermöglicht das Kegelgewinde eine sogenannte « organische » Kraftübertragung vom Zugbolzen 10 auf den gespannten Befestigungsbolzen 4. Die an beiden Elementen am stärksten beanspruchten Querschnitte $S_1$ und $S_2$ sind aufgrund ihrer Grösse dieser Belastung gewachsen. Die Mutter 6 wird bei höchstgedehntem Zustand wie beschrieben gedreht, bis sie am Kupplungsflansch anliegt.

Nach Demontage der Spannvorrichtung 10, 11, 13 sollten vorzugsweise die Stirnflächen der Kupplung 2, 2', der Muttern 6, 6' und des Befestigungsbolzens 4 bündig sein, um im Rotationsbetrieb möglichst wenig Luftreibung aufzuweisen.

Selbstverständlich ist die Erfindung nicht auf das Dargestellte und Beschriebene beschränkt. Sie ist sowohl bei stillstehenden als auch bei bewegten Maschinenteilen, sowohl bei versenkten als auch bei abstehenden Muttern mit Vorteil überall dort anwendbar, wo beispielsweise bei Montage und Demontage von vorgespannten Bolzen wenig Platz zur Verfügung steht, also Spannvorrichtungen mit geringer axialer Erstreckung anzuwenden sind.

**Patentansprüche**

1. Anordnung zum Vorspannen eines zwei Maschinenteile (2, 2') verbindenden Bolzens (4), wozu eine Spannvorrichtung (10, 11, 13) sich an einem der Maschinenteile abstützt und an einem koaxial im Bolzenende eingearbeiteten Gewindeteil (9) des zu spannenden Bolzens (4) angreift, wobei die tragende Länge des Gewindeteils (9) gleich gross oder kleiner wie die Höhe der auf dem Bolzen (4) aufgeschraubten Mutter (6) ist und in welchem ein mit Aussengewinde versehener Zugbolzen (10) der Spannvorrichtung (10, 11, 13) einschraubbar ist, dadurch gekennzeichnet, dass der Gewindeteil (9) und das entsprechende Aussengewinde des Zugbolzens (10) konisch ausgebildet sind.

2. Anordnung nach Anspruch 1, dadurch gekennzeichnet, dass das konische Gewinde einen Winkel zwischen 20° und 60° aufweist.

3. Anordnung nach Anspruch 1, dadurch gekennzeichnet, dass die Gänge des konischen Gewindes jenen eines metrischen Feingewindes entsprechen.

**Claims**

1. Arrangement for pretensioning a bolt (4) connecting two machine parts (2, 2'), for which purpose a tensioning device (10, 11, 13) is supported on one of the machine parts and engages on a thread part (9) belonging to the bolt (4) to be tensioned and attached coaxially to in the bolt end, the load bearing length of the thread part (9) being equal to or less than the height of the nut (6) screwed on the bolt (4), and a tie bolt (10) provided with an external thread and belonging to the tensioning device (10, 11, 13) being screwable into the said bolt (4), characterized in that the thread part (9) and the corresponding external thread of the tie bolt (10) are made conical.

2. Arrangement according to Claim 1, characterized in that the conical thread has an angle of between 20° and 60°.

3. Arrangement according to Claim 1, characterized in that the pitches of the conical thread correspond to those of a metric fine thread.

**Revendications**

1. Dispositif pour mettre en précontrainte un boulon (4) assemblant deux éléments de machine (2, 2'), dans lequel un dispositif de précontrainte (10, 11, 13) prend appui sur un des éléments de machine et attaque une partie filetée (9) du boulon (4) à précontraindre usinée coaxialement dans une extrémité de ce boulon, la longueur portante de la partie filetée (9) étant égale ou inférieure à la hauteur de l'écrou (6) vissé sur le boulon (4) et un boulon de traction (10) pourvu d'un filetage extérieur et faisant partie du dispositif de précontrainte (10, 11, 13) pouvant se visser dans cette partie filetée, caractérisé en ce que la partie filetée (9) et le filetage extérieur correspondant du boulon de traction (10) sont coniques.

2. Dispositif suivant la revendication 1, caractérisé en ce que le filetage conique présente un angle compris entre 20° et 60°.

3. Dispositif suivant la revendication 1, caractérisé en ce que les pas du filetage conique correspondent à ceux d'un filetage métrique fin.

FIG.1

FIG. 2